# EUROPÄISCHE PATENTSCHRIFT

(11) **EP 2 274 969 B1**
(45) Veröffentlichungstag und Bekanntmachung des Hinweises auf die Patenterteilung: **27.08.2014**
(21) Anmeldenummer: 10007347.7
(22) Anmeldetag: 15.07.2010
(51) Int. Cl.: A01G 7/06

(54) **Vorrichtung zum Injizieren von flüssigen Wirkstoffen in die Gefässbahnen von verholzten Pflanzen**
Device for injecting liquid agents into the vessels of wooden plants
Dispositif d'injection de matières actives liquides dans les bandes de vaisseau de plantes lignifiées

(30) Priorität: 17.07.2009 DE 102009033777
(43) Veröffentlichungstag der Anmeldung: 19.01.2011
(73) Patentinhaber: Technische Universität Kaiserslautern, 67663 Kaiserslautern (DE); RLP AgroScience GmbH, 67435 Neustadt/Weinstrasse (DE)
(72) Erfinder: Kipp, Heiko, Dipl.-Ing., 65203 Wiesbaden (DE); Dahler, Sebastian, 66903 Dittweiler (DE); Böhle, Martin, Prof. Dr.-Ing., 67661 Kaiserslautern (DE); Düker, Andreas, Dr., 67473 Lindenberg (DE); Kubiak, Roland, Prof. Dr. habil., 76829 Landau (DE)
(74) Vertreter: Patentanwälte Dr. Keller, Schwertfeger

(56) Entgegenhaltungen:
- EP-A1- 1 205 103
- WO-A2-2004/004443
- CN-U- 2 123 167

## Beschreibung

Die Erfindung betrifft eine Vorrichtung zum Injizieren von flüssigen Wirkstoffen in die Gefäßbahnen von verholzten Pflanzen gemäß dem Oberbegriff des Patentanspruchs 1.

Derartige Vorrichtungen dienen in erster Linie dem Schutz von Pflanzen vor Schädlings- und Pilzbefall oder sonstigen Krankheiten, können jedoch auch zur Applikation von Pflanzenstärkungsmitteln eingesetzt werden. Vor allem im Bereich der Kulturpflanzen, wie zum Beispiel Obstbäume und Weinreben, kommt dem Pflanzenschutz eine große Bedeutung zu, da Qualität und Ertrag ohne geeignete Pflanzenschutzmaßnahmen nicht gewährleistet werden können.

In diesem Zusammenhang ist eine Applikation der Wirkstoffe durch Sprühen auf die zu behandelnden Pflanzen bekannt, womit jedoch nur eine äußerliche Behandlung der Pflanzen möglich ist. Krankheitskeime im Inneren der Pflanzen sind auf diese Weise nicht erreichbar. Hinzu kommt, dass mit dem Aufsprühen der Pflanzenschutzmittel eine toxikologische Belastung der Umwelt einher geht, was schließlich dazu geführt hat, dass nach alternativen Möglichkeiten des Pflanzenschutzes geforscht worden ist. Hierzu zählt unter anderem das Applizieren von Wirkstoffen durch Injizieren in die Gefäßbahnen der Pflanzen selbst. Der Vorteil liegt in einer gezielten auf das Pflanzeninnere beschränkten Behandlung mit einer exakt dosierbaren Menge an Pflanzenschutzmittel, so dass toxikologische Stoffe nicht mehr in die Umwelt gelangen.

Zu diesem Zweck sind zahlreiche Vorrichtungen bekannt, die alle ein mit Wirkstoff befülltes Reservoir und eine in den verholzten Bereich einer Pflanze eingebrachte Kanüle aufweisen. Unter Ausnutzung des hydrostatischen Drucks oder mechanischer Druckerzeugungseinrichtungen wird die Kanüle mit dem Wirkstoff beschickt und dieser in das Pflanzeninnere injiziert.

Da eine Verwendung solcher Vorrichtungen oft fernab jeglicher Infrastruktur stattfindet, beispielsweise in landwirtschaftlich genutzten Gebieten wie Obstplantagen oder Weinbergen, ist es für den praktischen Einsatz vor Ort von großer Bedeutung, dass die Vorrichtungen mobil, robust und witterungsunabhängig sind. Zudem muss ein autarker Betrieb der Vorrichtung möglich sein, da eine Versorgung am Einsatzort mit elektrischer Energie und dergleichen im Regelfall nicht gegeben ist. Um auch ungeschultem Personal die sichere Bedienung der erfindungsgemäßen Vorrichtung zu ermöglichen, muss sich die Vorrichtung durch eine einfache und zuverlässige Handhabung auszeichnen. Nur bei einer korrekten Bedienung wird die injektionsbedingte Störwirkung auf die Pflanze auf das Notwendigste reduziert. Zusätzlich verringert eine einfache Handhabung das Risiko von Fehlbedienungen, die oft Ursache von Betriebsstörungen oder Kontamination des Bedieners mit dem Wirkstoff sind.

Aus der EP 0 111 254 ist eine Vorrichtung bekannt mit einer Kanüle mit Außengewinde, die zur Injektion in den Pflanzenstamm eingeschraubt wird. Auf dem äußeren Ende der Kanüle sitzt eine Zylinderkolbeneinheit, deren Kolben über eine Kolbenstange und damit verbundenen seitlichen Federn zur Erzeugung einer Vorschubkraft vorgespannt ist. Dadurch entsteht ein hydrostatischer Druck in der Zylinderkolbeneinheit, der das Injizieren des Wirkstoffes bewirkt.

Eine solche Vorrichtung arbeitet zwar autark, erlaubt jedoch nur Einzelapplikationen, das heißt für jede Applikation wird eine solche Vorrichtung benötigt. Für die Anwendung dieser Vorrichtung in Plantagen würde daher eine Vielzahl solcher Vorrichtungen benötigt, was sich als unwirtschaftlich herausstellt. Zudem erweist sich die Bedienung dieser Vorrichtung insbesondere beim Wiederbefüllen der Zylinderkolbeneinheit mit Wirkstoff wegen dem damit verbundenen Ein- und Aushängen der Federn als sehr umständlich und daher zeitaufwendig. Hinzu kommt, dass diese Vorrichtung die Gefahr von Lufteinschlüssen beim Befüllen der Zylinderkolbeneinheit mit Wirkstoff in sich birgt, was im Zuge der nachfolgenden Injektion Embolien der Gefäßbahnen bei den zu behandelnden Pflanzen verursachen kann.

Die US 5 355 619 und US 3 992 813 offenbaren Injektionsvorrichtungen mit einem Druckbehälter, der teilweise mit dem zu injizierenden Wirkstoff und teilweise mit einem komprimierten Gas befüllt ist. Durch die damit erzeugte Vorspannung des Druckbehälters wird der notwendige Injektionsdruck erzeugt. Somit arbeiten auch diese Vorrichtungen autark, bergen jedoch stets die Gefahr, dass bei nicht rechtzeitiger Beendigung der Injektion der Vorrat an Wirkstoff aufgebraucht ist und die komprimierte Luft in die Gefäßbahnen der Pflanze gelangt mit der Folge einer Gefäßembolie.

In der DE 10 2006 018 993 A1 ist eine Vorrichtung mit einem Druckbehälter beschrieben, dessen Behälterinneres durch einen Kolben in eine erste Kammer zur Aufnahme des Wirkstoffs und eine zweite Kammer zur Aufnahme eines unter Druck stehenden Gases unterteilt ist. Der Gasdruck erzeugt dabei eine Vorschubkraft auf den Kolben, der den Wirkstoff in die Pflanze injiziert. Durch die bauliche Trennung von Wirkstoff und vorgespanntem Gas wird die Gefahr verringert, dass Luft in die Gefäßbahnen der Pflanze vordringen kann. Der Vorgang zur Wiederbefüllung der Vorrichtung gestaltet sich jedoch vergleichsweise aufwändig, da die Vorrichtung weitgehend zerlegt werden muss. Zudem nimmt der Injektionsdruck mit fortschreitender Injektion ab, da im Zuge der Kolbenbewegung das Volumen der zweiten Kammer größer wird und der Druckabfall nicht durch Zufuhr von Gas kompensiert werden kann.

Gegenstand der WO 2004/004443 A2 ist eine Injektionspistole zur manuellen Injektion von Wirkstoffen in Pflanzen. Um die richtige Dosierung des Wirkstoffs sicherzustellen, wird vorgeschlagen, mehrmals nacheinander eine Einzelinjektion mit einer Menge von 10 ml unter hohem Druck von bis zu 17 bar in die Gefäßbahnen einer Pflanze zu injizieren. Dieser Vorgang wird so oft wiederholt, bis die gewünschte Gesamtdosis an Wirkstoff erreicht ist.

Bei der in der EP 1 205 103 A1 beschriebenen Vorrichtung zur Behandlung von Pflanzen durch Injektion von Wirkstoffen wird der Injektionsvorgang mittels einer elektronischen Datenverarbeitungseinheit gesteuert und überwacht. Nach Zugriff auf die Daten eines internen Speichers mit Informationen zu Art, Alter und Zustand der Pflanze sowie den jeweiligen Standortbedingungen ermittelt die Datenverarbeitungseinheit Art und Häufigkeit der Injektion. Die dazu gehörige Vorrichtung umfasst zwei Zylinderkolbeneinheiten von denen eine zur Injektion des Wirkstoffes dient und die andere den Antrieb für die Injektion erzeugt. Letztere wird von einem doppelt wirkenden Zylinder gebildet, dessen Kolben durch geeignete Druckbeaufschlagung mit einem Fluid repetierbar ist.

Vor diesem Hintergrund liegt die Aufgabe der Erfindung darin, eine Vorrichtung zum Injizieren von Wirkstoffen in die Gefäßbahnen von verholzten Pflanzen anzugeben, die für den praktischen Einsatz vor Ort geeignet ist und die eine für die Pflanze störungsminimierte Injektion des Wirkstoffs ermöglicht.

Diese Aufgabe wird durch eine Vorrichtung mit den Merkmalen des Patentanspruchs 1 gelöst.

Vorteile Ausführungsformen ergeben sich aus den Unteransprüchen.

Eine erfindungsgemäße Vorrichtung zeichnet sich zunächst dadurch aus, dass sie vollständig autark ihren Dienst versieht. Möglich wird dies durch den Einsatz eines mit einem Arbeitsfluid vorgespannten Speicherbehälters, der allein die Energie für den Injektionsdruck bereit stellt. Dadurch ist die Erfindung unabhängig von externen Energiequellen und ermöglicht so einen Einsatz fernab jeder Infrastruktur.

Somit benötigt die Vorrichtung zum Erzeugen des Injektionsdrucks im Wesentlichen nur einen druckfesten Speicherbehälter für das Arbeitsfluid und kommt ohne weitere mechanische Bauteile wie Batterien, Pumpen, Öl und dergleichen aus. Die Einfachheit der Konstruktion schlägt sich nieder in einem sehr geringem Eigengewicht, was Voraussetzung für die Mobilität und Handhabbarkeit der Vorrichtung ist, und einer hohen Betriebssicherheit.

In vorteilhafter Weiterbildung der Erfindung ist vorgesehen, die die Injektion bewirkende Einheit in Form einer ersten Zylinderkolbeneinheit und die den Vorschub bzw. Injektionsdruck erzeugende Einheit in Form einer zweiten Zylinderkolbeneinheit baulich zu trennen. Dadurch wird sichergestellt, dass während des Injektionsvorgangs kein Gas in die Pflanzengefäße gelangt und damit der Injektionsvorgang weitestgehend störungsfrei bei maximaler Aufnahmeleistung der Pflanze vonstatten geht. Somit ist gewährleistet, dass die zu behandelnden Pflanzen den Eingriff möglichst unbeschadet überstehen. Ferner genügt es, lediglich den Teilbereich der zweiten Zylinderkolbeneinheit druckfest auszubilden, während die mit dem Wirkstoff befüllte erste Zylinderkolbeneinheit nur gegenüber dem atmosphärischen Druck abzudichten ist.

Zur Übertragung der Vorschubkraft von der ersten Zylinderkolbeneinheit auf die zweite Zylinderkolbeneinheit ist eine Kopplung der beiden Kolben vorgesehen, was beispielsweise mittels eines - nicht dargestellten - kommunizierenden Leitungssystems erreicht werden kann. Bevorzugt ist jedoch eine Ausführungsform, bei der zur Kopplung die erste Zylinderkolbeneinheit und zweite Zylinderkolbeneinheit koaxial hintereinander angeordnet sind, so dass die Verbindung beider Kolben über eine gemeinsame Kolbenstange möglich ist. Die Bewegung des Kolbens der zweiten Zylinderkolbeneinheit wird so unmittelbar auf den Kolben der ersten Zylinderkolbeneinheit übertragen. Eine solche Ausführungsform zeichnet sich durch eine äußerst kompakte Bauweise aus. Da die gemeinsame Kolbenstange mehrfach gehalten und geführt ist, richten sich die biegesteif an die Kolbenstange anschließenden Kolben exakt in einer Radialebene zur Zylinderlängsachse aus, was insgesamt eine exakte Dosierung des Wirkstoffes ermöglicht und die Störunanfälligkeit der Vorrichtung steigert.

Eine besondere Ausführungsform der Erfindung sieht vor, die den Vorschub erzeugende zweite Zylinderkolbeneinheit so auszubilden, dass deren Kolben sowohl vor als auch zurück bewegt werden kann, also repetierbar ist. Ermöglicht wird dies durch eine Aufteilung des Zylindervolumens in eine erste Kammer und eine zweite Kammer, die durch den Kolben voneinander getrennt sind und die wechselweise mit dem Arbeitsfluid aus dem Speicherbehälter beaufschlagbar sind. Das bringt zunächst den Vorteil, dass die Bedienung der Vorrichtung sehr einfach und schnell erfolgen kann, was vor allem bei mehrfach nacheinander auszuführenden Injektionen zum Tragen kommt. Zur erneuten Befüllung der ersten Zylinderkolbeneinheit wird lediglich ein Saugschlauch für den Wirkstoff angeschlossen und durch einen Schaltvorgang die Bewegungsrichtung des Kolbens gewechselt. Aufgrund der Einfachheit und geringen Anzahl an auszuführenden Schritten ist die Bedienung der Vorrichtung sehr sicher, so dass eine Fehlbedienung unwahrscheinlich und die Bedienung auch weniger qualifiziertem Personal möglich ist. Aber auch der Zeitaufwand beim Bedienen der Vorrichtung, insbesondere bei deren Befüllung, wird durch die Repetierbarkeit der Kolben erheblich reduziert und damit die Wirtschaftlichkeit der Erfindung insgesamt gesteigert.

Um eine dementsprechende Bedienung der erfindungsgemäßen Vorrichtung zu erleichtern, ist in Weiterbildung der Erfindung vorgesehen, ein Steuerventil zwischen Speicherbehälter und zweiter Zylinderkolbeneinheit vorzusehen. Durch dessen Betätigung kann in bequemer Weise zwischen den beiden Betriebsarten gewechselt oder die Kolbenbewegung insgesamt gestoppt werden.

Eine Ausführungsform mit repetierbarem Kolben bietet ferner die Möglichkeit der Probennahme und erweitert dadurch den Einsatzbereich der Vorrichtung beträchtlich. Durch Zurückfahren der beiden Kolben wird in der ersten Zylinderkolbeneinheit ein Unterdruck erzeugt, der zur Entnahme flüssiger Pflanzeninhaltsstoffe aus den Gefäßbahnen einer Pflanze führt.

Bevorzugt ist ferner eine Ausführungsform der Erfindung, bei der das injektionsseitige axiale Ende des Zylinders der ersten Zylinderkolbeneinheit eine konvexe Wölbung aufweist, in deren Scheitel die Auslassöffnung für den Wirkstoff angeordnet ist. Durch Aufrechtstellen der Vorrichtung während des Befüllens sammelt sich eventuell vorhandene Luft im Scheitel an und kann durch eine kurze Vorschubbewegung des Kolbens aus dem System ausgeblasen werden. Anstelle einer konvexen Wölbung ist auch eine kegelige Ausbildung des Zylinderendes denkbar, bei der sich unerwünschte Lufteinschlüsse in der Kegelspitze sammeln und durch eine dort angeordnete Öffnung entfernt werden.

Einen ähnlichen Zweck verfolgt eine nicht dargestellte Ausführungsform der Erfindung, bei der der Zylinder der ersten Zylinderkolbeneinheit einen Totraum im Umfangsbereich aufweist. Eventuell vorhandene Luft sammelt sich in diesem Totraum an, wird jedoch vom Kolben nicht aus dem Zylinder gedrückt, da der Kolben den Totraum überfährt, ohne die Luft mitzunehmen. So wird auch auf diese Weise verhindert, dass im Zuge der Injektion Luft in die Gefäßbahnen der Pflanze gelangt.

Zur Anpassung der Injektionsparameter an eine bestimmte Pflanzen- und Behandlungsart ist bei der erfindungsgemäßen Vorrichtung sowohl der Injektionsdruck als auch die Injektionsdosis exakt einstellbar. Zur Einstellung des Injektionsdrucks ist eine Kraftbegrenzungseinheit für den Kolbenvorschub vorgesehen. Dazu ist ein Druckminderer zwischen dem Speicherbehälter und der zweiten Zylinderkolbeneinheit zwischengeschaltet, mit dem eine Entkoppelung des im Speicherbehälter vorherrschenden Drucks vom Druck des Arbeitsfluids in der den Vorschub erzeugenden zweiten Zylinderkolbeneinheit erreicht wird. Der Arbeitsdruck ist mittels des Druckminderers auf einen vorgewählten Wert einstellbar ist, so dass die Gefäßbahnen nicht mit einem zu hohen Druck beaufschlagt und dadurch die Gefäßbahnen zerstört werden. Gleichzeitig kann der Speicherbehälter unter hohem Druck mit einer möglichst großen Menge an Arbeitsfluid befüllt werden, so dass eine Vielzahl von Kolbenhüben und damit Belade- und Injektionszyklen ohne erneute Befüllung möglich ist. Für die Fälle, in denen die durch den Speicherbehälter vorgegebene Menge des nutzbaren Volumens an Arbeitsfluid nicht genügt, um die notwendige Anzahl von Belade- und Injektionszyklen ausführen zu können, ist es möglich, durch zusätzliches Vorsehen einer manuell zu bedienenden Pumpe den Speicherbehälter vor Ort vorzuspannen und damit die Funktionstüchtigkeit der erfindungsgemäßen Vorrichtung wieder herzustellen.

Zur genauen Dosierung des Wirkstoffs wird der Kolben der ersten Zylinderkolbeneinheit um eine definierte Wegstrecke zurückgefahren und dann gestoppt, was mit Hilfe des Vierwegeventils ohne Mühe möglich ist. Dabei wird in den Zylinder der ersten Zylinderkolbeneinheit die entsprechende Menge an Wirkstoff gesaugt. Durch Verwendung eines transparenten Materials für den Zylinder, z. B. Glas oder Kunststoff, und durch Anordnung einer Messskala am Zylinder, kann die korrekte Menge an Wirkstoff visuell überprüft werden.

Es ist möglich mit einer solchen Vorrichtung nicht nur eine, sondern eine Vielzahl von Pflanzen gleichzeitig zu behandeln. Die Versorgungseinheit dient dabei als zentrale den Wirkstoff bevorratende und den Injektionsdruck erzeugende Einheit. Über ein Verteilersystem können dann alle zu behandelnde Pflanzen an die Versorgungseinheit angeschlossen und mit Wirkstoff versorgt werden. Damit ist ein äußerst wirkungsvoller und wirtschaftlicher Pflanzenschutz im großen Rahmen möglich.

Die Erfindung wird nachstehend anhand eines in der Zeichnung dargestellten Ausführungsbeispiels näher erläutert. Es zeigt
- Fig. 1: eine erste Schrägansicht auf eine erfindungsgemäße Vorrichtung während des Injektionsbetriebs,
- Fig. 2: eine weitere Schrägansicht auf die in Fig. 1 dargestellte Vorrichtung in größerem Maßstab ohne Injektionsleitungen und
- Fig. 3: einen Längsschnitt durch die in Fig. 2 dargestellte Vorrichtung.

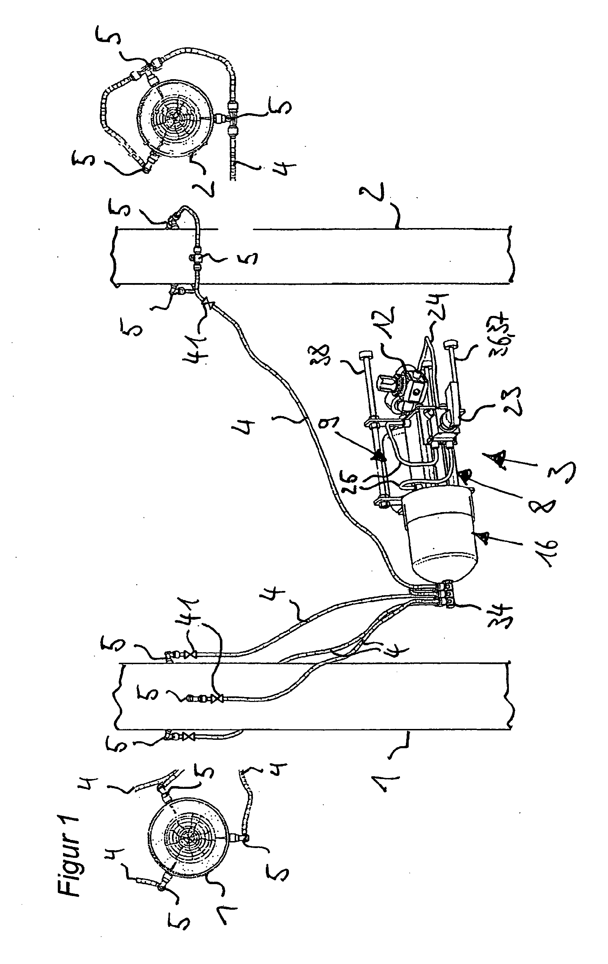

Fig. 1 zeigt eine erfindungsgemäße Vorrichtung während des Vorgangs des Injizierens. Mit den Bezugszeichen 1 und 2 sind die Stämme der zu behandelnden Pflanzen gekennzeichnet, bei denen es sich beispielsweise um Obstbäume oder Weinreben handeln kann. Die Vorrichtung umfasst eine Versorgungseinheit 3, von der Injektionsleitungen 4, deren Endbereiche mit Injektoreinheiten 5 ausgestattet sind, zu den Injektionsstellen an den Stämmen 1 und 2 führen. Jede Injektoreinheit 5 besteht im wesentlichen aus einer Kanüle, die mit ihrer Spitze in den Bereich der Gefäßbahnen eines Stammes 1, 2 hineinreicht und die von der Versorgungseinheit 3 über die Injektionsleitung 4 mit einem Wirkstoff versorgt wird. Die Injektionsleitungen 4 sind mit Absperrhähnen 41 ausgestattet, die auch in die Injektoreinheiten 5 oder in den weiter unten beschriebenen Verteiler 34 der Versorgungseinheit 3 integriert sein können.

Zur Behandlung einer Pflanze können, wie am Stamm 1 realisiert, mehrere Injektionsleitungen 4, an deren Enden sich jeweils eine Injektoreinheit 5 befindet, zu den Injektionsstellen am Stamm 1 führen. Die Injektoreinheiten 5 werden auf diese Weise parallel mit dem Wirkstoff beschickt. Bei Stamm 2 ist eine alternative Injektionsart dargestellt, bei der eine einzige Injektionsleitung 4 zum Stamm 2 führt und die Injektoreinheiten 5 am Ende der Injektionsleitung 4 in Reihe angeordnet sind, um mit Wirkstoff versorgt zu werden.

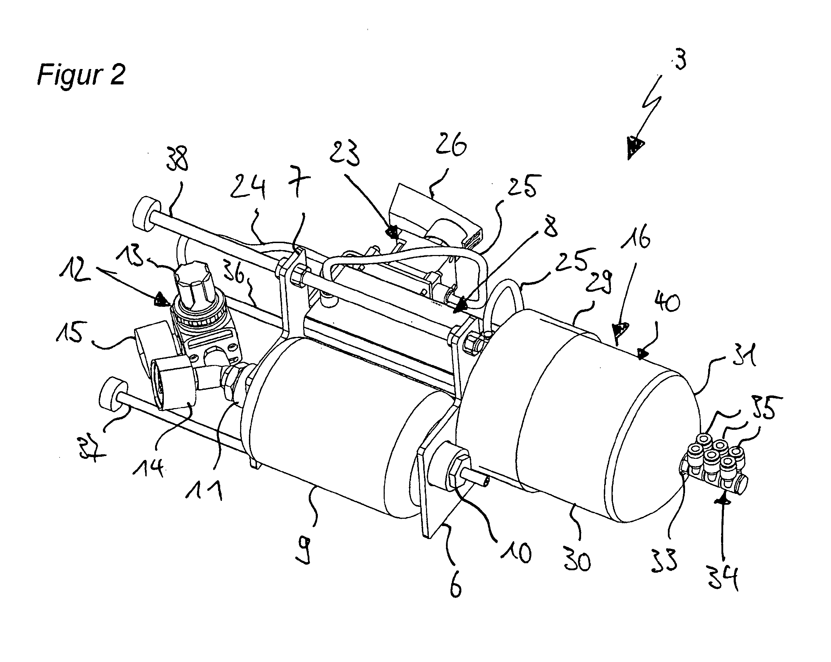

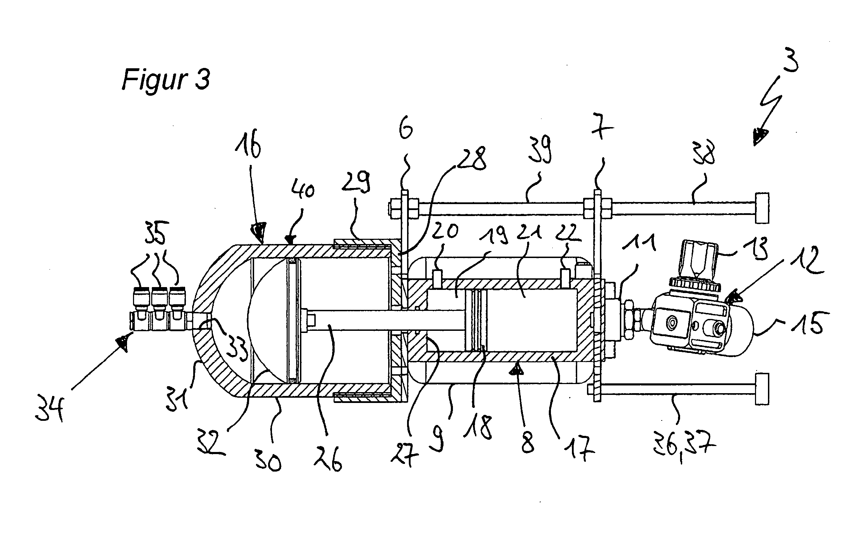

Der konstruktive Aufbau einer erfindungsgemäßen Vorrichtung wird nachfolgend unter zusätzlicher Bezugnahme auf die Fig. 2 und 3 näher beschrieben. Dort sieht man zwei T-förmige Montageplatten 6 und 7, die von einer Zylinderkolbeneinheit 8 und einem zylindrischen Speicherbehälter 9 in deckungsgleicher Lage planparallel im Abstand gehalten sind. Dazu sind die stirnseitigen Enden der Zylinderkolbeneinheit 8 und des zylindrischen Speicherbehälters 9 starr an die seitlichen Schenkel der Montageplatten 6 und 7 angeschlossen.

Der Speicherbehälter 9 dient der Bevorratung mit einem kompressiblen Arbeitsfluid, vorzugsweise Luft. Zur Befüllung des Speicherbehälters 9 mit dem Arbeitsfluid bis zu einem Druck von beispielsweise 10 bar ist an dessen Stirnseite zentrisch ein Ventil 10 angeordnet, das sich durch eine Öffnung in der Montageplatte 6 erstreckt. An das Ventil 10 kann ein nicht dargestellter Kompressor oder eine manuell zu bedienende Pumpe angeschlossen werden.

Die gegenüberliegende Stirnseite des Speicherbehälters 9 ist mit einem entsprechenden Auslassventil 11 ausgestattet, das sich auch auf dieser Seite koaxial zur Behälterlängsachse durch eine Öffnung in der Montageplatte 7 erstreckt und an das ein Druckminderer 12 angeschlossen ist. Mit Hilfe einer Einstellschraube 13 am Druckminderer 12 kann der Arbeitsdruck des Fluids unabhängig vom Druck im Speicherbehälter 9 eingestellt werden, beispielsweise auf einen Wert zwischen 2 und 6 bar, vorzugsweise 4 bar. Ein Manometer 14 am Druckminderer 12 zeigt dabei den Druck des Fluids im Speicherbehälter 9 an; ein weiteres Manometer 15 den Arbeitsdruck stromabwärts des Druckminderers 12.

Aufgabe der bereits erwähnten, zwischen den Montageplatten 6 und 7 angeordneten Zylinderkolbeneinheit 8 ist es, den Vorschub für den Kolben 32 einer weiteren Zylinderkolbeneinheit 16 zu erzeugen, um den Wirkstoff mit ausreichend Druck in die Gefäßbahnen der zu behandelnden Pflanze injizieren zu können. Dazu weist die Zylinderkolbeneinheit 8 einen Zylinder 17 und darin längsverschieblich geführten Kolben 18 auf, der den Zylinder 17 unterteilt in eine erste Kammer 19, in die ein Einlassstutzen 20 mündet, und in eine zweite Kammer 21, an die ein Einlassstutzen 22 anschließt.

Zur Versorgung und Steuerung der Zylinderkolbeneinheit 8 ist an deren Seitenfläche ein Vierwegeventil 23 angeordnet, das eingangsseitig über eine Druckleitung 24 an den Druckminderer 12 anschließt. Auf der Ausgangsseite verbindet die weitere Druckleitung 25 das Vierwegeventil 23 mit dem Einlassstutzen 20 zur ersten Kammer 19 und dem Einlassstutzen 22 der zweiten Kammer 21. Mittels eines Bedienhebels 26 lässt sich der Ventilkörper des Vierwegeventils 23 in eine Stellung bringen, bei der entweder die erste Kammer 19 der Zylinderkolbeneinheit 8 oder die zweite Kammer 21 der Zylinderkolbeneinheit 8 oder keine der beiden Kammern 19 bzw. 21 mit dem Arbeitsfluid beaufschlagt wird. Auf diese Weise ist es möglich, den Kolben 18 im Zylinder 17 sowohl vor als auch zurück zu bewegen oder in jeder beliebigen Stellung anzuhalten.

Wie vor allem aus Fig. 3 hervorgeht, schließt an der der ersten Kammer 19 zugewandten Seite des Kolbens 18 eine koaxial zur Zylinderachse verlaufende Kolbenstange 26 biegesteif an, die mittels einer dynamischen Dichtung druckfest durch die Stirnwand 27 und eine dazu fluchtende Öffnung in der Montageplatte 6 geführt ist.

An der der Zylinderkolbeneinheit 8 abgewandten Seite der Montageplatte 6 ist die Zylinderkolbeneinheit 16 befestigt, und zwar mit fluchtendem Verlauf der beiden Zylinderlängsachsen. Der Zylinder 40 der Zylinderkolbeneinheit 16 ist zweiteilig ausgebildet und umfasst einen von einer Stirnwand 28 gebildeten Deckel, an den ein zylindrischer Ansatz 29 mit Innengewinde angeformt ist. Weiterer Bestandteil des Zylinders 40 ist ein glockenförmiger Körper mit einem zylindrischen Abschnitt 30, der an seinem einen Ende mit einem Außengewinde versehen ist und dessen anderes Ende durch eine konvex gewölbte Stirnwand 31 verschlossen ist. Durch die Möglichkeit des Ein- und Ausschraubens des glockenförmigen Körpers in und aus dem Deckel kann der Zylinder 40 der Zylinderkolbeneinheit 16 zu Wartungs- und Reinigungszwecken zerlegt werden, ohne die Versorgungseinheit 3 weiter demontieren zu müssen.

In dem von dem zylindrischen Abschnitt 30 umschlossenen Raum ist ein gegenüber der Zylinderinnenwandung abdichtender Kolben 32 längsverschieblich geführt, an dessen eine Seite die von der Zylinderkolbeneinheit 8 kommende und sich durch eine Öffnung in der Stirnwand 28 des Deckels erstreckende Kolbenstange 26 anschließt. Die Zylinderkolbeneinheiten 8 und 16 besitzen somit eine gemeinsame Kolbenstange 26 mit der Folge, dass Bewegungen des Kolbens 18 sich unmittelbar auf den Kolben 32 auswirken. Die gegenüberliegende Seite des Kolbens 32 ist komplementär zur Wölbung der Stirnwand 31 ausgebildet. Der Raum zwischen dem Kolben 32 und der Stirnwand 31 dient als Reservoir für den zu injizierenden Wirkstoff. Durch komplementäre Ausbildung von Stirnwand 31 und Kolben 32 ist eine vollständige Entleerung des Reservoirs möglich, so dass die Gefahr einer Kontamination des Bedieners mit Wirkstoff beim Hantieren mit der Vorrichtung weitestgehend ausgeschlossen ist.

Im Scheitel der gewölbten Stirnwand 31 befindet sich eine Austrittsöffnung 33, an die ein Verteiler 34 anschließt, der mit Einzelanschlüssen 35 für im vorliegenden Fall maximal sechs Leitungen 4 ausgestattet ist. Wie bereits erwähnt können in den Verteiler 34 ein oder mehrere Absperrhähne integriert sein, um beispielsweise zu verhindern, dass beim Befüllen ein Unterdruck an der Injektionsstelle entsteht.

Im Betriebszustand bieten die Montageplatten 6 und 7 mit ihrer breiten Basis einen sicheren Stand. Um für den Befüllvorgang, Wartungs- oder Reinigungsarbeiten die Versorgungseinheit 3 in einer aufrechten Position abstellen zu können, sind ferner zwei Füße 36 und 37 vorgesehen, die in achsparalleler Lage biegesteif an die beiden seitlichen Schenkel der Montageplatte 7 anschließen und sich mit ihrem freien Ende über das Ende des Druckminderers 12 hinaus erstrecken. Ein mit diesen achsparallel verlaufender dritter Fuß 38 ist biegesteif durch den Steg der Montageplatte 7 geführt und schließt im weiteren an den Steg der Montageplatte 6 an, um auf diese Weise einen Griff 39 zum Tragen der erfindungsgemäßen Vorrichtung zu bilden.

Die Funktionsweise der erfindungsgemäßen Vorrichtung erklärt sich wie folgt. Zunächst wird der Speicherbehälter 9 unter Druck mit einem kompressiblen Arbeitsfluid wie zum Beispiel Luft befüllt, was vorzugsweise mit einem Kompressor oder einer Handpumpe geschieht. Zuvor oder danach wird die Versorgungseinheit 3 auf die Füße 37 und 38 in aufrechter Position abgestellt, so dass der Scheitel der Zylinderkolbeneinheit 16 einen Hochpunkt bildet.

Falls noch nicht geschehen, wird der Kolben 18 der Zylinderkolbeneinheit 8 in eine vordere, der Stirnwand 27 benachbarte Position gefahren, wozu das Vierwegeventil 23 so geschaltet wird, dass die zweite Kammer 21 mit dem Arbeitsfluid aus dem Speicherbehälter 9 beaufschlagt wird.

Nun kann eine Saugleitung an den Verteiler 34 angeschlossen werden, die mit ihrem anderen Ende zu einem mit Wirkstoff befüllten Vorratsbehälter führt. Als Saugleitung kann auch eine Injektionsleitung 4 dienen, die zu diesem Zweck im Falle des Wiederbefüllens von der Injektoreinheit 5 abgezogen wird. Falls bereits Injektionsleitungen 4 mit Injektoreinheiten 5 an den Verteiler 34 angeschlossen sind, werden die Absperrhähne 41 geschlossen. Durch Umschalten des Vierwegeventils 23 wird nun die erste Kammer 19 der Zylinderkolbeneinheit 8 mit dem Arbeitsfluid beschickt, wodurch der Kolben 18 zurückfährt.

Über die Kolbenstange 26 wird dabei eine Rückwärtsbewegung des Kolben 32 der Zylinderkolbeneinheit 16 initiiert, wobei der dadurch erzeugte Unterdruck ein Ansaugen des Wirkstoffes über die Saugleitung bewirkt. Eventuelle unerwünschte Lufteinschlüsse sammeln sich durch die aufrechte Stellung der Verteilereinheit 1 im Scheitel der Zylinderkolbeneinheit 16. Durch Schubumkehr der Kolben 18 und 32 wird diese Luft über den Saugschlauch aus dem System eliminiert.

Nach Entfernen der Saugleitung wird der gewünschte Injektionsdruck am Druckminderer 12 eingestellt und - falls nicht vorher schon geschehen - die Leitungen 4 an den Verteiler 34 angeschlossen. Durch Aktivierung des Kolbensystems werden die Leitungen 4 nach vorherigem Öffnen der Absperrhähne 41 bei gleichzeitiger Entlüftung mit Wirkstoff befüllt. Um ein Umfallen der Versorgungseinheit 3 zu verhindern, wird diese in eine liegende Position gebracht und die Injektoreinheiten 5 an den Stämmen 2 und 3 angebracht, wodurch die Vorrichtung ihre Injektionsbereitschaft erlangt.

Durch entsprechende Steuerung des Vierwegeventils 23 wird dann eine Vorschubkraft auf den Kolben 18 und damit den Kolben 32 aufgebracht, worauf sich dieser in Richtung der Stirnwand 31 bewegt und dabei den Wirkstoff in die Stämme 1 und 2 injiziert, bis der Kolben 32 an der Stirnwand 31 anliegt.

Reicht das Volumen der Zylinderkolbeneinheit 16 für die erforderliche Menge an Wirkstoff nicht aus, so kann die Zylinderkolbeneinheit 16 auf einfache Weise wieder befüllt werden. Dazu werden Absperrhähne 41 an den Injektionsleitungen 4 geschlossen, um keine Pflanzenstoffe aus den Stämmen 1 und 2 zu extrahieren. Nach Anbringen einer Saugleitung am Verteiler 34 oder durch Verwendung einer Injektionsleitung 4 kann dann durch entsprechende Schaltung des Vierwegeventils 23 eine Schubumkehr der Kolben 18 und 32 veranlasst werden, die ein Ansaugen von neuem Wirkstoff zur Befüllung der Zylinderkolbeneinheit 16 bewirkt. Eine Skala am Umfang des Zylinders 40 erleichtert dabei das Abmessen der genauen Füllmenge. Nach Demontage der Saugleitung wird mittels des Vierwegeventils 23 zurück in den Injektionsmodus umgeschaltet. Diese Vorgehensweise kann so oft wiederholt werden, bis der Druck im Speicherbehälter 9 so weit abgefallen ist, dass die Kraft zum Antrieb des Kolbens 18 in der Zylinderkolbeneinheit 8 nicht mehr ausreicht. Erst dann ist ein erneutes Befüllen des Speicherbehälters 9 mit Arbeitsfluid notwendig. Bis zu diesem Zeitpunkt führt die erfindungsgemäße Vorrichtung jedoch den Injektionsvorgang mit konstantem Injektionsdruck aus, da aus dem Speicherbehälter 9 in die zweite Kammer 21 nachströmendes Arbeitsfluid die Vorschubkraft aufrecht erhält.

Da der Kolben 18 der Zylinderkolbeneinheit 8 repetierbar betreibbar ist, kann eine erfindungsgemäße Vorrichtung auch zur Entnahme von Proben aus dem Stamm von Pflanzen eingesetzt werden. Dies geschieht durch Erzeugung eines Unterdrucks in der Zylinderkolbeneinheit 16, indem die Zylinderkolbeneinheit 8 so angesteuert wird, dass deren Kolben 18 zurück fährt. Eine Skala am Umfang des Zylinders 40 gibt an, wie viel Pflanzenflüssigkeit bereits entnommen worden ist. Die Probennahme kann jederzeit durch eine Neutralschaltung des Vierwegeventils 23 beendet werden.

## Patentansprüche

1. Vorrichtung zum Injizieren von flüssigen Wirkstoffen in die Gefäßbahnen von verholzten Pflanzen (2, 3), mit einer Versorgungseinheit (3), die über Leitungen (4) mit mindestens einer Injektionsstelle an mindestens einer Pflanze (1, 2) verbunden ist, wobei die Versorgungseinheit (3) eine erste Zylinderkolbeneinheit (16) umfasst, deren Zylinder (40) mit dem Wirkstoff befüllt ist und deren Kolben (32) zur Erzeugung eines Injektionsdrucks mit einer axialen Vorschubkraft beaufschlagbar ist, und
- eine zweite Zylinderkolbeneinheit (8), die an einen Speicherbehälter (9) angeschlossen und mit dem kompressiblen Arbeitsfluid beaufschlagbar ist,
- wobei der Kolben (32) der ersten Zylinderkolbeneinheit (16) und der Kolben (18) der zweiten Zylinderkolbeneinheit (8) miteinander gekoppelt sind, so dass mittels des auf den Kolben (16) der zweiten Zylinderkolbeneinheit (8) wirkenden Arbeitsfluids die axiale Vorschubkraft für den Kolben (32) der ersten Zylinderkolbeneinheit (16) erzeugbar ist
- und wobei der Kolben (18) der zweiten Zylinderkolbeneinheit (8) den Zylinder der zweiten Zylinderkolbeneinheit (8) unterteilt in eine erste Kammer (19) und eine zweite Kammer (21) und wahlweise die erste Kammer (19) oder die zweite Kammer (21) mit dem Arbeitsfluid beaufschlagbar ist, **gekennzeichnet durch** den Speicherbehälter (9), der starr mit der Vorrichtung verbunden und mit einem kompressiblen gasförmigen Arbeitsfluid vorspannbar ist.

2. Vorrichtung nach Anspruch 1, **dadurch gekennzeichnet, dass** die erste Zylinderkolbeneinheit (16) und die zweite Zylinderkolbeneinheit (8) koaxial zueinander angeordnet sind und der Kolben (32) der ersten Zylinderkolbeneinheit (16) und der Kolben (18) der zweiten Zylinderkolbeneinheit (8) über eine gemeinsame Kolbenstange (26) verbunden sind.

3. Vorrichtung nach Anspruch 1 oder 2, **dadurch gekennzeichnet, dass** der Zylinder (40) der ersten Zylinderkolbeneinheit (16) einen Hochpunkt zu Entlüftung aufweist.

4. Vorrichtung nach einem der Ansprüche 1 bis 3, **dadurch gekennzeichnet, dass** das injektionsseitige axiale Ende des Zylinders (40) der ersten Zylinderkolbeneinheit (16) eine konvexe Wölbung aufweist und die Auslassöffnung (33) für den Wirkstoff am Scheitel der Wölbung angeordnet ist.

5. Vorrichtung nach einem der Ansprüche 1 bis 3, **dadurch gekennzeichnet, dass** das injektionsseitige axiale Ende des Zylinders (40) der ersten Zylinderkolbeneinheit (16) kegelförmig ausgebildet ist und die Auslassöffnung (33) für den Wirkstoff an der Kegelspitze angeordnet ist.

6. Vorrichtung nach Anspruch 4 oder 5, **dadurch gekennzeichnet, dass** der Kolben (32) der ersten Zylinderkolbeneinheit (16) komplementär zur Wölbung oder Kegelform des ersten Zylinders (40) ausgebildet ist.

7. Vorrichtung nach einem der Ansprüche 4 bis 6, **dadurch gekennzeichnet, dass** die Vorrichtung eine Aufstandsfläche besitzt, die planparallel zur Tangentialebene im Scheitel der Wölbung oder der Kegelspitze ausgerichtet ist.

8. Vorrichtung nach einem der Ansprüche 1 bis 7, **dadurch gekennzeichnet, dass** der Zylinder (40) der ersten Zylinderkolbeneinheit (16) mindestens einen mit dem Wirkstoff benetzbaren Totraum aufweist, der im Zuge der Axialbewegung des Kolbens (32) der ersten Zylinderkolbeneinheit (16) nicht in Kontakt mit dem Kolben (32) gelangt.

9. Vorrichtung nach einem der Ansprüche 1 bis 8, **dadurch gekennzeichnet, dass** in die Druckleitungen zwischen Speicherbehälter (9) und zweiter Zylinderkolbeneinheit (8) ein Druckminderer (12) zwischengeschaltet ist, vorzugsweise ein einstellbarer Druckminderer (12).

10. Vorrichtung nach einem der Ansprüche 1 bis 9, **dadurch gekennzeichnet, dass** in die Druckleitungen zwischen Speicherbehälter (9) und zweiter Zylinderkolbeneinheit (8) eine Steuereinheit zwischengeschaltet ist, vorzugsweise ein Vierwegeventil (23).

11. Vorrichtung nach einem der Ansprüche 1 bis 10, **dadurch gekennzeichnet, dass** der Zylinder (40) der ersten Zylinderkolbeneinheit (16) an seinem injektionsfernen axialen Ende mit einem lösbaren Deckel (28, 29) verschlossen ist, der starr mit der Versorgungseinheit (1) verbunden ist, so dass der Zylinder (40) der ersten Zylinderkolbeneinheit (16) abnehmbar ist.

12. Vorrichtung nach einem der Ansprüche 1 bis 11, **dadurch gekennzeichnet, dass** der Zylinder (40) der ersten Zylinderkolbeneinheit (16) aus einem transparenten Material besteht, vorzugsweise aus Glas oder Kunststoff.

13. Vorrichtung nach einem der Ansprüche 1 bis 12, **dadurch gekennzeichnet, dass** das Arbeitsfluid von der Umgebungsluft gebildet ist.

14. Vorrichtung nach einem der Ansprüche 1 bis 13, **dadurch gekennzeichnet, dass** in die Versorgungseinheit (1) zusätzlich eine manuell betätigbare Gaspumpe integriert ist, mit der der Speicherbehälter (9) vorspannbar ist.

## Claims

1. Device for injecting liquid active substances into the vessel channels of lignified plants (2, 3), comprising a supply unit (3) which is connected to at least one injection site on at least one plant (1, 2) by means of lines (4), the supply unit (3) comprising a first cylinder piston unit (16), the cylinder (40) of which is filled with the active substance and to the piston (32) of which an axial feed force can be applied in order to generate an injection pressure, and
- a second cylinder piston unit (8), which is connected to a storage tank (9) and can be supplied with a compressible working fluid,
- the piston (32) of the first cylinder piston unit (16) and the piston (18) of the second cylinder piston unit (8) being coupled to one another so that the axial feed force for the piston (32) of the first cylinder piston unit (16) can be generated by means of the working fluid acting on the piston (16) of the second cylinder piston unit (8),
- and the piston (18) of the second cylinder piston unit (8) dividing the cylinder of the second cylinder piston unit (8) into a first chamber (19) and a second chamber (21) and optionally the first chamber (19) or the second chamber (21) being able to be supplied with the working fluid, **characterised by** the storage tank (9) which is rigidly connected to the device and can be pressurised by a compressible gaseous working fluid.

2. Device according to claim 1, **characterised in that** the first cylinder piston unit (16) and the second cylinder piston unit (8) are arranged coaxially with respect to one another, and the piston (32) of the first cylinder piston unit (16) and the piston (18) of the second cylinder piston unit (8) are connected by means of a common piston rod (26).

3. Device according to either claim 1 or claim 2, **characterised in that** the cylinder (40) of the first cylinder piston unit (16) has a high point for ventilation.

4. Device according to any of claims 1 to 3, **characterised in that** the injection-side axial end of the cylinder (40) of the first cylinder piston unit (16) has a convex curvature and the outlet (33) for the active substance is arranged in the crest of the curvature.

5. Device according to any of claims 1 to 3, **characterised in that** the injection-side axial end of the cylinder (40) of the first cylinder piston unit (16) is conical and the outlet (33) for the active substance is arranged at the tip of the cone.

6. Device according to either claim 4 or claim 5, **characterised in that** the piston (32) of the first cylinder piston unit (16) is configured to be complementary to the curvature or conical shape of the first cylinder (40).

7. Device according to any of claims 4 to 6, **characterised in that** the device has a contact face which is oriented plane-parallel to the tangent plane in the crest of the curvature or the tip of the cone.

8. Device according to any of claims 1 to 7, **characterised in that** the cylinder (40) of the first cylinder piston unit (16) comprises at least one clearance volume which can be wetted with the active substance and does not come into contact with the piston (32) in the course of the axial movement of the piston (32) of the first cylinder piston unit (16).

9. Device according to any of claims 1 to 8, **characterised in that** a pressure reducer (12), preferably an adjustable pressure reducer (12), is interposed in the pressure lines between the storage tank (9) and the second cylinder piston unit (8).

10. Device according to any of claims 1 to 9, **characterised in that** a control unit, preferably a four-way valve (23), is interposed in the pressure lines between the storage tank (9) and the second cylinder piston unit (8).

11. Device according to any of claims 1 to 10, **characterised in that** the cylinder (40) of the first cylinder piston unit (16) is connected to a detachable cover (28, 29) at the axial end thereof which is remote from the injection, said cover being rigidly connected to the supply unit (1) so that the cylinder (40) of the first cylinder piston unit (16) can be removed.

12. Device according to any of claims 1 to 11, **characterised in that** the cylinder (40) of the first cylinder piston unit (16) consists of a transparent material, preferably of glass or
a plastic material.

13. Device according to any of claims 1 to 12, **characterised in that** the working fluid is formed by the ambient air.

14. Device according to any of claims 1 to 13, **characterised in that** a manually actuable gas pump is additionally integrated in the supply unit (1), by means of which pump the storage tank (9) can be pressurised.

## Revendications

1. Dispositif d'injection de substances actives liquides dans les voies vasculaires de plantes lignifiées (2, 3), comportant une unité d'alimentation (3) qui est reliée par l'intermédiaire de conduites (4) à au moins un point d'injection sur au moins une plante (1, 2), l'unité d'alimentation (3) comprenant une première unité à cylindre et piston (16) dont le cylindre (40) est rempli de la substance active et dont le piston (32) peut être soumis à une force d'avance axiale pour générer une pression d'injection, et
- une deuxième unité à cylindre et piston (8) qui est raccordée à un réservoir de stockage (9) et peut être soumise au fluide de travail compressible,
- le piston (32) de la première unité à cylindre et piston (16) et le piston (18) de la deuxième unité à cylindre et piston (8) étant couplés entre eux, de sorte que la force d'avance axiale pour le piston (32) de la première unité à cylindre et piston (16) peut être générée au moyen du fluide de travail agissant sur le piston (16) de la deuxième unité à cylindre et piston (8)
- et le piston (18) de la deuxième unité à cylindre et piston (8) divisant le cylindre de la deuxième unité à cylindre et piston (8) en une première chambre (19) et une deuxième chambre (21) et le fluide de travail pouvant être appliqué au choix à la première chambre (19) ou à la deuxième chambre (21), **caractérisé par** le réservoir de stockage (9) qui est relié de manière rigide au dispositif et peut être pressurisé avec un fluide de travail gazeux compressible.

2. Dispositif selon la revendication 1, **caractérisé en ce que** la première unité à cylindre et piston (16) et la deuxième unité à cylindre et piston (8) sont disposées coaxialement l'une par rapport à l'autre et le piston (32) de la première unité à cylindre et piston (16) et le piston (18) de la deuxième unité à cylindre et piston (8) sont reliés par une tige de piston (26) commune.

3. Dispositif selon la revendications 1 ou 2, **caractérisé en ce que** le cylindre (40) de la première unité à cylindre et piston (16) présente un point haut pour la purge d'air.

4. Dispositif selon l'une des revendications 1 à 3, **caractérisé en ce que** l'extrémité axiale côté injection du cylindre (40) de la première unité à cylindre et piston (16) présente une courbure convexe et l'ouverture de sortie (33) pour la substance active est disposée au sommet de la courbure.

5. Dispositif selon l'une des revendications 1 à 3, **caractérisé en ce que** l'extrémité axiale côté injection du cylindre (40) de la première unité à cylindre et piston (16) est conformée en cône et l'ouverture de sortie (33) pour la substance active est disposée au sommet du cône.

6. Dispositif selon la revendication 4 ou 5, **caractérisé en ce que** le piston (32) de la première unité à cylindre et piston (16) est conformé de façon complémentaire à la courbure ou à la forme de cône du premier cylindre (40).

7. Dispositif selon l'une des revendications 4 à 6, **caractérisé en ce que** le dispositif possède une surface de pose qui est orientée dans un plan parallèle au plan tangent au sommet de la courbure ou du cône.

8. Dispositif selon l'une des revendications 1 à 7, **caractérisé en ce que** le cylindre (40) de la première unité à cylindre et piston (16) présente au moins un espace mort pouvant être mouillé par la substance active, qui n'entre pas en contact avec le piston (32) au cours du mouvement axial du piston (32) de la première unité à cylindre et piston (16).

9. Dispositif selon l'une des revendications 1 à 8, **caractérisé en ce qu'**un réducteur de pression (12), de préférence un réducteur de pression (12) réglable, est intercalé dans les conduites sous pression entre le réservoir de stockage (9) et la deuxième unité à cylindre et piston (8).

10. Dispositif selon l'une des revendications 1 à 9, **caractérisé en ce qu'**une unité de commande, de préférence un distributeur à quatre voies (23), est intercalée dans les conduites sous pression entre le réservoir de stockage (9) et la deuxième unité à cylindre et piston (8).

11. Dispositif selon l'une des revendications 1 à 10, **caractérisé en ce que** le cylindre (40) de la première unité à cylindre et piston (16) est fermée à son extrémité axiale éloignée de injection par un couvercle amovible (28, 29) qui est relié de manière rigide à l'unité d'alimentation (1), de sorte que le cylindre (40) de la première unité à cylindre et piston (16) peut être retiré.

12. Dispositif selon l'une des revendications 1 à 11, **caractérisé en ce que** le cylindre (40) de la première unité à cylindre et piston (16) est réalisé dans un matériau transparent, de préférence en verre ou en matière plastique.

13. Dispositif selon l'une des revendications 1 à 12, **caractérisé en ce que** le fluide de travail est formé par l'air ambiant.

14. Dispositif selon l'une des revendications 1 à 13, **caractérisé en ce qu'**une pompe à gaz à actionnement manuel, avec laquelle le réservoir de stockage (9) peut être pressurisé, est intégrée en plus dans l'unité d'alimentation (1).
